**Europäisches Patentamt**

**European Patent Office**

**Office européen des brevets**

(19)

(11) **EP 1 281 779 A2**

(12) **EUROPEAN PATENT APPLICATION**

(43) Date of publication:
**05.02.2003 Bulletin 2003/06**

(51) Int Cl.⁷: **C22B 3/02**, C22B 11/00

(21) Application number: **02380171.5**

(22) Date of filing: **30.07.2002**

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(30) Priority: **03.08.2001 ES 200101826**

(71) Applicant: **SOCIEDAD ESPANOLA DE CARBUROS METALICOS S.A.**
**08038 Barcelona (ES)**

(72) Inventors:
• **Vinyals Olia, Juan**
**08038 Barcelona (ES)**

• **Roca Vallmajor, Antonio**
**08038 Barcelona (ES)**
• **Cruells Cadevall, Montserrat**
**08038 Barcelona (ES)**
• **Juan Morera, Eulalia**
**08038 Barcelona (ES)**
• **Casado Gimenez, Juan**
**08038 Barcelona (ES)**

(74) Representative: **Ponti Sales, Adelaida et al**
**Oficina Ponti**
**C. Consell de Cent, 322**
**08007 Barcelona (ES)**

(54) **Selective metal leaching process**

(57) The invention refers to a selective metal leaching process from the materials that contain them, in which said metals come into contact with a solution comprising said process two or more in this order, of the following leaching steps: (a), (b) or (c) in the following order: (a) Treatment of the material with an aqueous solution in the presence of oxygen; (b) Treatment of the remaining material with an aqueous solution in the presence of oxygen and ozone; (c) Treatment of the remaining material with an aqueous solution in the presence of oxygen, ozone and a third reagent. And optionally a step of separation of phases is carried out after every one of the previously steps (a), (b) or (c). Said process is used for the recovery of metals from scrap, ores, concentrates and mixtures of these.

## FIG. 1

## Description

### FIELD OF THE INVENTION

This invention relates to a process for leaching and/or passivation of metals contained in scrap, ores, concentrates, by-products or mixtures thereof. In this process the presence of oxygen and/or ozone is required.

### BACKGROUND

In the state of the art, there are numerous processes for the recovery and recycling of base metals (Cu, Ni, etc.) and precious metals that may be classified as pyrometallurgical processes and hydrometallurgical processes.
The main disadvantages of the pyrometallurgical processes are high energy consumption and the generation of gases, dust and slag which have a powerful impact on the environment.
The hydrometallurgical processes can provide energetically favorable solutions. However, the use of toxic reagents ($Cl_2$, $HNO_3$, aqua regia, $CN^-$,...) also has a powerful impact on the environment.
On the other hand, in the state of the art there are very few documents which describe applications of mixtures of oxygen and ozone in the leaching of metals or ores. The American patent US 4752412 refers to a process for the recovery of precious metals from ore, particularly gold, by means of pre-treatment with activated oxygen, the activated oxygen including, among other elements, ozone. In said patent the so-called "activated oxygen" is obtained by means of an ultraviolet light generator and the pre-treatment with "activated oxygen" is performed as an oxidation pre-treatment prior to the leaching as such. The precious metals are leached in subsequent steps by any known method, such as cyanidation.

This invention relates to a new leaching process which is acceptable from an environmental perspective and is based on a combination of leaching steps in which oxygen and/or ozone play a part.

In the same way, in the case of this invention the leaching of metals, including gold and palladium, is performed directly with ozone, while subsequent leaching steps based on treatment with toxic reagents such as chlorine, aqua regia or cyanide are not necessary.

### DESCRIPTION OF THE INVENTION

The present invention relates to a process for leaching metals from the materials that contain them, characterized in that these materials come into contact with a solution that contains oxygen, ozone and a third complexing reagent.

The materials treated with this process are scrap, ores, concentrates, by-products or mixtures thereof, soils polluted with metals, mineral or nuclear waste, etc.

The metals leached by means of the process of the present invention can be precious metals, for example gold and palladium.

The third complexing reagent may be a type of redox pair whose reduced form is liable to be oxidized in the leaching solution and whose oxidized form is capable of attacking the materials to be treated.

Optionally, said third reagent may be a depassivating or pickling reagent.

Optionally, said third reagent may be an anion, preferably chloride. This chloride anion may be added to the solution in the form of HCl, chloride salts, preferably NaCl or $CaCl_2$, or mixtures of any of these substances.

In the same way, the present invention relates to a process of selective leaching and/or passivation of materials that contain base and/or precious metals characterized in that it includes two or more, in this order, of the following leaching steps:

(a) Treatment of the material with an aqueous solution in the presence of oxygen.
(b) Treatment of the material with an aqueous solution in the presence of ozone.
(c) Treatment of the material with an aqueous solution in the presence of oxygen, ozone and a third reagent.
    Optionally, a phase separation step is performed after each leaching step.

The process described is performed in an acidic aqueous solution, preferably one with an inorganic acid and most preferably one with sulphuric acid.

Optionally, said process includes the following previous steps:

i) Treatment of the material with an aqueous solution in the absence of oxygen.
ii) Separation of the resultant phases.

The afore-mentioned prior steps i) and ii) are performed in an aqueous solution which may be acidic and/or alkaline.

In particular, when the aqueous solution is acidic, it is an inorganic acid solution, preferably sulphuric acid.

When the aqueous solution is alkaline, it is one with an inorganic base, preferably sodium hydroxide.

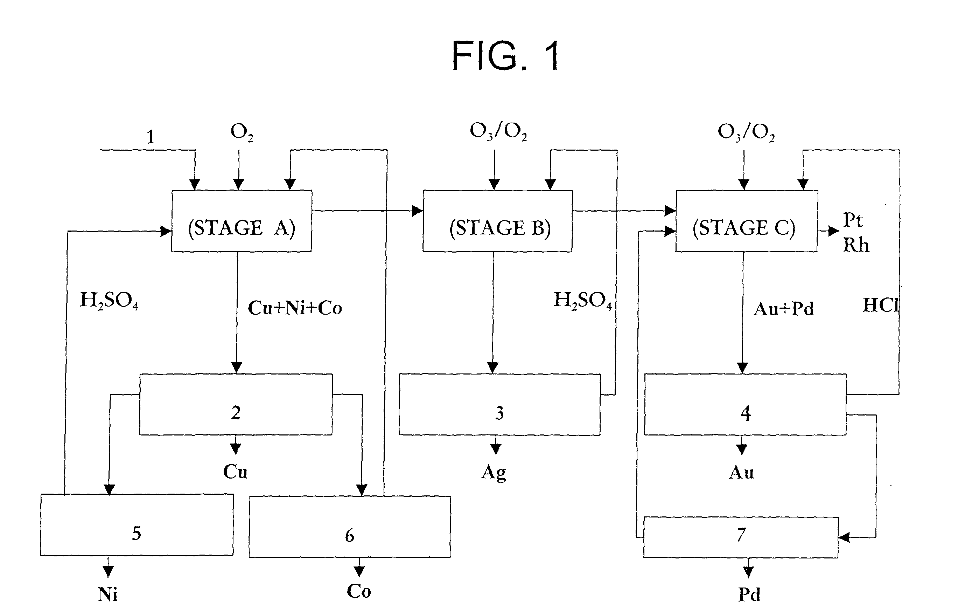

In this way, during the previous step (i) of the process, metals such as aluminium, zinc etc. are dissolved or attacked; during step (a) of the principal process, copper, nickel, tin, lead and alloys of these metals are dissolved or attacked; with the addition of ozone, silver and mercury are dissolved or attacked, and with the addition of a third reagent, gold and palladium are dissolved or attacked. Metals such as rhodium and platinum are left as residue in the last step. A possible diagram of the process is shown in Figure 1. This diagram is provided for information purposes and is non-limiting with respect to this process.

The selectivity of the process is not limited to the various steps of the process, but it can also be verified in each of the steps. Thus for example, in step (a) of leaching in the presence of oxygen the Sn and Pb are selectively attacked, and a suspension of a tin oxide and lead sulphate precipitate is formed. Once the Sn and Pb have been completely attacked, leaching of the nickel commences, and finally, when almost all the nickel has dissolved, leaching of copper begins to acquire significance.

Advantageously, in this way the process of this invention allows the selective recovery of metals from the materials that contain them. In the case of other processes that already exist in the state of the art, such as the use of nitric acid, aqua regia, etc., the separation of metals is not selective and it is costly, since these metals are attacked indiscriminately. In our case, optionally aqua regia may be used to dissolve metals such as rhodium and platinum from the solid residue left by this process.

The combined use of oxygen and ozone has the advantage over other hydrometallurgical metal or ore leaching processes that by-products due to the leaching agent are not produced during leaching. The fundamental half-reactions are:

$$O_3 + 2H^+ + 2e^- \rightarrow O_2 + H_2O$$

$$O_2 + 4H^+ + 4e^- \rightarrow 2H_2O$$

$$M \rightarrow M^{2+} + 2e^-$$

The recovery of metals from the solution can be performed electrolytically:

$$2M^{2+} + 2H_2O \text{ (electrolysis)} \rightarrow 2M + 4H^+ + O_2$$

the acidity and the oxygen consumed in leaching are regenerated.

Likewise, in these media the reduction of certain metals with $H_2$ is feasible. In this case, the acidity is also regenerated, without accumulation of foreign anions or cations generated by the leaching or reduction reagents,

$$2M^{2+} + 2H_2 \rightarrow 2M + 4H^+$$

In general, in the majority of reactions of these steps there is kinetic control by transfer of matter in liquid phase, as demonstrated by the examples shown below.

Another advantageous aspect of this invention is that neither the reagents used in the process nor the products generated by the reagents have an important impact on the environment, unlike cyanidation, attacking with aqua regia, etc.

In the same way, leaching of gold from ores, concentrates or scrap with $O_2/O_3/Cl^-/H^+$ has the advantage that gold enters the solution as $AuCl_4^-$, and in this case the recovery of the gold by reduction is much easier than in cyanide solutions, since the complex $Au(CN)_2^-$ is very stable and more difficult to reduce to metal gold.

As it can be seen in examples 1 and 2, the leaching of gold and palladium in $O_2/O_3/Cl^-/H^+$ is produced through the depassivating effect of the $Cl^-$ ion. This effect takes place at ambient temperature, from very low $Cl^-$ concentrations (>0.01M for Au or 0.1M for Pd) and in the presence of very moderate $H^+$ concentrations (>0.01M).

The active oxidant species during the leaching of gold and palladium in $O_2/O_3/Cl^-/H^+$ solutions is essentially ozone, because chlorine was not detected by volumetric analysis or by ultraviolet spectroscopy. On the other hand, the depassivating effect of Cl⁻ ion occurs for Cl⁻ concentrations above 0.01M or 0.1M. Above these values, the leaching rate of gold and palladium is independent of the Cl⁻ concentration and depends only of the ozone concentration in the solution. Under these conditions, the leaching rate of gold and palladium is proportional to the ozone concentration.

The present invention also relates to a new process for recovery of metals from the materials that contain them, which is characterized in that the recovery of a noble metal from a laminar material comprising a base metal and said noble metal is carried out according to the following leaching step:

- Treating said laminar material with an aqueous solution comprising a gas so that a selective leaching of said base metal is carried out by releasing said noble metal when said base metal is dissolved.

Advantageously, said process allows the separation of the noble metal by leaching of the metal binding it, so that said noble metal is released from the laminar material and is present in the solution in an unattacked state, thereby being easily removed from the aqueous solution.

In said process the gas used is preferably oxygen, ozone or mixtures thereof, although other gases which perform the same function as mentioned above can be used.

Preferably, the noble metal being recovered is gold, silver, rhodium or palladium, although the recovery of other noble metals is in the scope of the present invention.

The laminar material from which said noble metal is recovered also comprises a base metal which is usually copper, silver, nickel or different layers thereof.

On the other hand, as disclosed in the previously processes, the aqueous solution being used can be acidic or alkaline, the use of an inorganic acid such as sulphuric acid being preferred when an acidic aqueous solution is needed, and an inorganic base such as a sodium hydroxide when an alkaline solution is needed.

The following are some of the advantageous applications of the process of this invention:

- Recycling of metals in general. In particular, at the end of previous steps in which precious metals may be concentrated after the elimination of light materials (organic materials, plastics, aluminium,...) and magnetic materials (iron,...)
- Recycling of catalysts in automobiles.
- Recycling of electronic scrap.
- Recycling of jewellery, optical, medical scrap, ...
- Replacement of amalgamation for the treatment of gold concentrates.
- Replacement of cyanidation for oxidized gold ores and, in general, other types of unoxidized minerals after a process of pre-oxidation with oxygen.
- Recycling of batteries that contain nickel, mercury,...
- Treatment of electrum-type gold alloys.
- Treatment of anode slimes from copper electrorefining.
- Treatment of soils polluted with metals.
- Treatment of mineral by-products.
- Treatment of waste from the nuclear industry.

**EXAMPLES**

**EXAMPLE 1. Leaching of gold**

The leaching medium is a dilute acid solution in the presence of chloride ions, in the following proportions:

- oxygen (in the gas): 95-99%
- ozone (in the gas): 1-5%
- chloride (in solution): 0.1-2 molar gold, in its ionic forms $Au^{3+}$ and $Au^+$, is insoluble in an aqueous medium.

Chloride ions are the most economical and ecological complexing agents of gold in a medium in which ozone is dissolved.

By experiment the stoichiometry (molAu/molO₃) can be determined in a medium that comprises $O_2$, $O_3$ and HCl. With this purpose an aqueous ozone solution is saturated, and the concentration and the total number of ozone moles are determined. Subsequently, an excess of gold (in powder form) is added, whereupon determination can be made of the number of moles of gold that gradually dissolve over the period of time until no more ozone is present in the solution, or the point is reached at which no more gold can be dissolved. Finally, a comparison is made between the number of moles of ozone initially present in the solution and the dissolved moles of metal, as shown below:

Solution volume: 550 cm$^3$ 1M HCl
Initial ozone concentration: 5.1 10$^{-4}$
Initial moles of ozone: 2.8 10$^{-4}$
Solid gold added: 0.2g

| t (minutes) | Au in solution (mg/l) | moles Au | moles $O_3$/mol Au |
|---|---|---|---|
| 24 | 47 | 1.3 10$^{-4}$ | 2.2 |
| 30 | 48 | 1.3 10$^{-4}$ | 2.1 |
| 45 | 50 | 1.4 10$^{-4}$ | 2.0 |
| 55 | 52 | 1.5 10$^{-4}$ | 1.9 |
| 355 | 67 | 1.9 10$^{-4}$ | 1.5 |

In this way, it is demonstrated that the leaching of gold in the presence of $O_2$, $O_3$ and HCl has the following stoichiometry:

$$Au(s) + 3/2\ O_3\ (ac) + 4Cl^-\ (ac) + 3H^+ \rightarrow AuCl_4^-\ (ac) + 3/2\ O_2 + 3/2H_2O$$

This stoichiometry implies that 365 g of ozone are required in order to dissolve 1 kg of gold, and therefore the cost of the gas is negligible given the high value of the metal.

If the chloride ions are not found to be present, the leaching process is not effective.

Since the presence of chloride ions is of key importance to leaching of the gold, the effect of the concentration of chloride ions on the leaching rate:

| | HCl 0.1M | HCl 1M | HCl 2M |
|---|---|---|---|
| v(moleAu/cm$^2$min) | 1.9·10$^{-7}$ | 1.7·10$^{-7}$ | 2.1·10$^{-7}$ |
| v(gAu/cm$^2$day) | 0.055 | 0.049 | 0.059 |
| Kt(cm/s) | 5·10$^{-3}$ | 5·10$^{-3}$ | 5·10$^{-3}$ |

Furthermore, the effect of the concentration of chloride ions on the leaching rate at a concentration of 0.01M $H_2SO_4$ and 5-6.10$^{-4}$M $O_3$ at room temperature was tested:

| Cl$^-$ (mole/l) | 0.001 | 0.01 | 0.06 | 0.1 | 0.5 |
|---|---|---|---|---|---|
| v(mole Au/cm$^2$min) | < 10$^{-9}$ | 1.4 .10$^{-7}$ | 2.0 .10$^{-7}$ | 1.8 .10$^{-7}$ | 1.5 .10$^{-7}$ |

As a conclusion, the rate of the leaching process is 5 practically independent of the concentration of Cl$^-$ ions for values higher than 0.01 M and practically independent of the concentration of H$^+$ ions for values higher than 0.1M, such as it is shown in the previous tables. For economic and environmental reasons, concentrations at which it is recommended to perform the leaching process are, preferably, equal or lower than 0.1M.

The effect of the ozone concentration was determined in 0.05M Cl$^-$ and 0.01M $H_2SO_4$ at room temperature:

| $O_3$ (mole/l) | 1.3 | .10$^{-4}$ | 2.6 | .10$^{-4}$ | 4.4 | .10$^{-4}$ | 6.0 | .10$^{-4}$ |
|---|---|---|---|---|---|---|---|---|
| V(mole Au/cm$^2$min) | 0.6 | .10$^{-7}$ | 1.1 | .10$^{-7}$ | 1.6 | .10$^{-7}$ | 2.0 | .10$^{-7}$ |

As it can be seen, the leaching rate under these conditions is proportional to the ozone concentration in the solution.

**EXAMPLE 2: Leaching of palladium**

Following the methodology described in example 1, the stoichiometry is determined for the palladium:

Solution volume: 550 cm$^3$
Initial ozone concentration: 5.1·10$^{-4}$

Initial moles of ozone: $2.8 \cdot 10^{-4}$
Solid Pd added (in powder): 0.2 g

| t (hours) | Pd in solution (mg/l) | moles Pd | Mol $O_3$/mol Pd |
|---|---|---|---|
| 1 | 45 | $2.3 \ 10^{-4}$ | 1.2 |
| 2 | 47 | $2.4 \ 10^{-4}$ | 1.2 |
| 4 | 50 | $2.6 \ 10^{-4}$ | 1.1 |
| 6 | 53 | $2.8 \ 10^{-4}$ | 1.0 |

In this way the conclusion is reached that the stoichiometric ratio is 1 mol $O_3$/1mol Pd:

$$O_3 + 4Cl^- + 2H^+ + Pd \rightarrow PdCl_4^{2-} + O_2 + H_2O$$

This means that there is a consumption of 451 grams of ozone per kilogram of palladium, which represents a negligible cost given the high value of the metal.

On the other hand, the effect of chloride ion concentration in the leaching rate of palladium is determined at 0.01M $H_2SO_4$ and $5.0.10^{-4}$M $O_3$, at room temperature:

| $Cl^-$ (mole/l) | 0.03 | 0.1 | | 0.3 | | 0.5 | |
|---|---|---|---|---|---|---|---|
| V(mole Pd/cm$^2$min) | $< 10^{-9}$ | 1.8 | $.10^{-7}$ | 1.8 | $.10^{-7}$ | 1.8 | $.10^{-7}$ |

As it can be seen, the depassivation of palladium occurs at $Cl^-$ concentrations between 0.03 and 0.1M.
The effect of $O_3$ concentration at 0.1M $Cl^-$, 0.01M $H_2SO_4$ and room temperature is determined:

| $O_3$ (mole/l) | 2.0 | $.10^{-4}$ | 3.3 | $.10^{-4}$ |
|---|---|---|---|---|
| V(mole Pd/cm$^2$min) | 0.9 | $.10^{-7}$ | 1.6 | $.10^{-7}$ |

Under these conditions the leaching rate is also proportional to the ozone concentration.

**EXAMPLE 3: Treatment of a gravimetric gold concentrate.**

The starting point is a mineral concentrate, obtained by grinding and concentration of auriferous ore on a vibrating table. The composition of the concentrate, in addition to the approximate particle size of the main constituents, is shown in the following table.

| | % weight | Size range (μm) | Average size (μm) |
|---|---|---|---|
| Native copper | 57 | 10-200 | 100 |
| Native gold | 26 | 10-200 | 100 |
| Electrum (Au,Ag) | 2 | 10-200 | 50 |
| Silver | 1 | 10-100 | 50 |
| Hematite ($Fe_2O_3$) | 3 | 10-100 | 50 |
| Cassiterite ($SnO_2$) | 9 | 10-100 | 50 |
| Baryte ($BaSO_4$) | 2 | 10-100 | 50 |

0.5 grams of concentrate are treated as follows:

Step A: Leaching with $O_2/H_2SO_4$

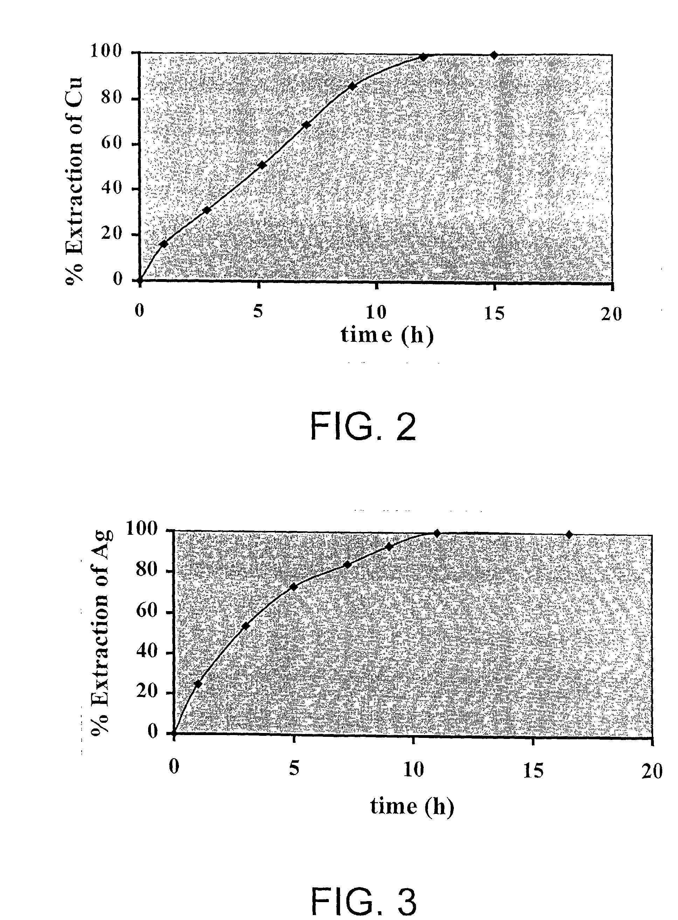

The concentrate is placed in an agitated reactor at 700 r.p.m. containing 500 cm$^3$ of 0.25M $H_2SO_4$ solution. A flow of 21.5 liters/hour of $O_2$ is injected at atmospheric pressure and room temperature, which guarantees a steady oxygen concentration of some 40 ppm. Figure 2 shows the evolution of the extraction of copper in time. Extraction is completed in 12 hours. In parallel with the solution of the copper, partial solution of the hematite takes place, which reaches 42% in 12 hours. The remaining constituents of the concentrate are not subject to any significant attack.

Step B: Solid/liquid separation:

By filtration a solid residue is obtained which contains the gold, electrum, silver, cassiterite and baryte of the original concentrate, as well as part of the hematite. The liquid phase contains 0.57 g/l of copper and 0.02 g/l of iron. The copper contained in the solution can be recovered by any of the known reduction processes. Reduction with $H_2$ gas or electrolysis are considered particularly favorable, since both processes regenerate the sulphuric acid which is necessary in the leaching step.

Step C: Leaching with $O_2/O_3/H_2SO_4$.

The solid residue from step B is placed in an agitated reactor at 700 r.p.m. containing 250 cm$^3$ of 0.25M $H_2SO_4$ solution. 21.5 liters/hour of an $O_2/O_3$ mixture are injected at atmospheric pressure and room temperature. The partial $O_3$ pressure is 0.036 atmospheres. The steady $O_3$ concentration in the liquid is 30 ppm during the treatment. Figure 3 shows the evolution of the extraction of native silver in time. Extraction is completed in 11 hours.
The silver contained in the electrum is not leached during this step.

Step D: Solid/liquid separation:

A solid residue is obtained which contains all the gold, electrum, cassiterite and baryte of the original concentrate. The liquid phase contains 0.02 g/l of silver and less than 3 mg/l of iron and copper. The recovery of silver can also be performed by any known method of reduction or precipitation.

Step E: Leaching with $O_2/O_3/HCl$

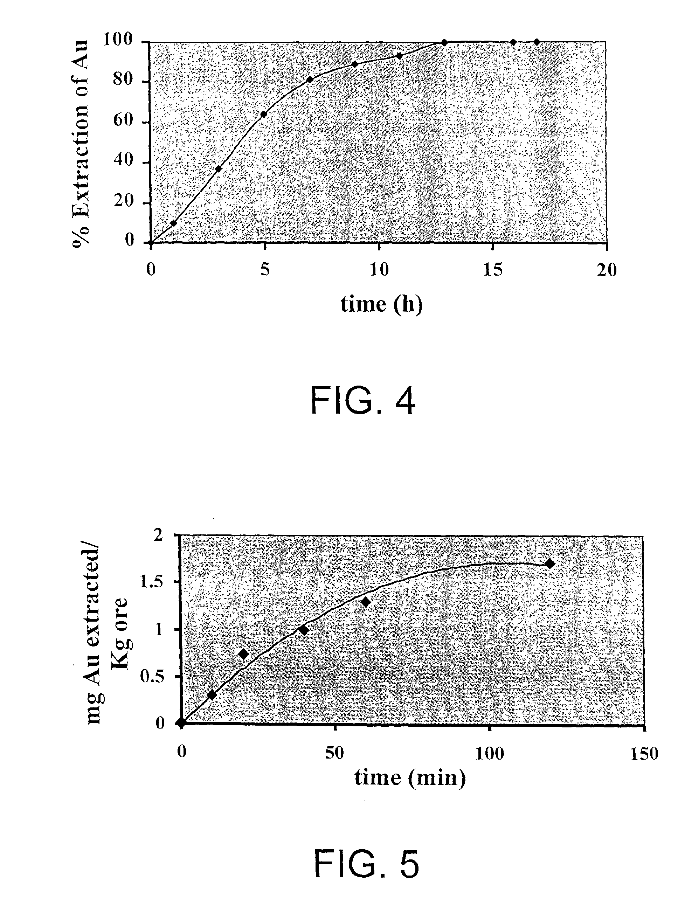

The solid residue from step D is placed in an agitated reactor at 700 r.p.m. containing 250 cm$^3$ of 0.1M HCl solution. 21.5 liters/hour of an $O_2/O_3$ mixture are injected at atmospheric pressure and room temperature. The partial $O_3$ pressure is 0.036 atmospheres. Under these conditions, the steady $O_3$ concentration in the liquid is 38 ppm during the treatment. Figure 4 shows the evolution of the extraction of native gold in time. Extraction is completed in 13 hours. In this step, only a partial attack on the electrum takes place, the particles of which are covered with a protective coating of AgCl.

Step F: Solid/liquid separation:

A solid residue is obtained which contains the partially attacked electrum and the cassiterite and baryte-type inert minerals. The solution contains 0.52 g/l of Au, about 1 ppm of Fe, and an Ag and Cu concentration of less than 1 ppm. The gold is recovered from this solution by any known reduction method.

Step G: Treatment of the electrum

The residue containing electrum can be treated in two ways:

a) The residue is treated with 250 cm$^3$ of a solution of 200 g/l of $CaCl_2$ at room temperature and for 25 minutes. Solution of the passivating layers of AgCl takes place. The residue obtained can then be recirculated to step E.

b) The residue is put into an agitated reactor at 700 r.p.m. containing 250 cm$^3$ of a 0.1 M HCl solution and 200 g/l of $CaCl_2$. 21.5 liters/hour of an $O_2/O_3$ mixture are injected at atmospheric pressure. The $O_3$ pressure is 0.036 atmospheres. After 13 hours the electrum is completely attacked, the gold and also the silver passing into the solution. The solution is separated from the residue. The residue essentially contains cassiterite and may be used in the metallurgy of tin. The solution of gold and silver in the $CaCl_2$ medium can be treated by any known process of selective gold and silver reduction for the recovery of these metals.

**EXAMPLE 4: Extraction of gold from ore**

The starting point is gossan ore with the following composition:

| Fe | SiO$_2$ | Pb | As | K | S | Sb | Cu | Zn |
|----|------|----|----|---|---|----|----|----|
| 27.3% | 43.2% | 1.5% | 0.7% | 0.08% | 0.53% | 0.36% | 0.05% | 0.02% |

| Au | Hg | Ag |
|----|----|----|
| 2.5g/t | 15g/t | 52g/t |

The principal minerals are quartz ($SiO_2$), goethite ($FeOOH$), hematite ($Fe_2O_3$) and solid jarosite-beudantite solutions ($kFe_3(SO_4)_2(OH)_6$-$PbFe_3(SO_4)$ ($AsO_4$) ($OH)_6$). The gold is in an elementary state in the form of particles, their maximum size being approximately 1μm. The silver is mainly present in the form of silver and mercury sulpho-halides [$Hg_5As_4S_5$ (Cl, I, Br)$_4$] and in dilute solid solution in jarosite-beudantite phases.

50g of gossan ore is taken, 65% ground to a size of less than 40μm. Two consecutive treatments are performed:

1) pre-oxidation with O$_2$/0.1M HCl

The ore is put into an agitated reactor at 900 min$^{-1}$ containing 500 cm$^3$ of 0.1M HCl solution. An oxygen flow ($P_{O2}$ = 1 atm) of 21.5 l/h is injected for 8 hours, at room temperature, in order to oxidize the small quantities of residual sulphides present in the ore, which will consume ozone in the subsequent treatment. The solution potential during this step is 505±2 mV [using Ag/AgCl (KCl sat) as a reference electrode]. At the end of the treatment a solution with the following composition in mg/l is obtained.

| Au | Ag | Hg | As | Cu | Pb | Fe |
|----|----|----|----|----|----|----|
| < 0.002 | 0.22 | 0.001 | 0.2 | 8.5 | 71 | 217 |

During this pre-oxidation, approximately 20% of the Cu, 5% of the Pb and less than 1% of the Fe contained in the ore are dissolved. This is due to the attack of the small quantities of residual sulphides present in the ore. The goethite, the hematite and the solid jarosite-beudantite solutions are practically inert in this medium.

2) Leaching of Au with O$_2$/O$_3$/0.1M HCl

The pulp resulting from the afore-mentioned treatment is injected with a flow of 21.5 l/h of $O_2$/$O_3$ mixture with $PO_3$ of 0.036 atm., at room temperature. The pulp is agitated for 2 hours at 900 r.p.m. The steady solution potential is 1150±5mV [using Ag/AgCl (KCl sat) as a reference electrode]. The composition in mg/l of the liquid after two hours of attack is as follows:

| Au | Ag | Hg | As | Cu | Pb | Fe |
|----|----|----|----|----|----|----|
| 0.17 | 0.26 | 1.5 | 0.3 | 11 | 67 | 230 |

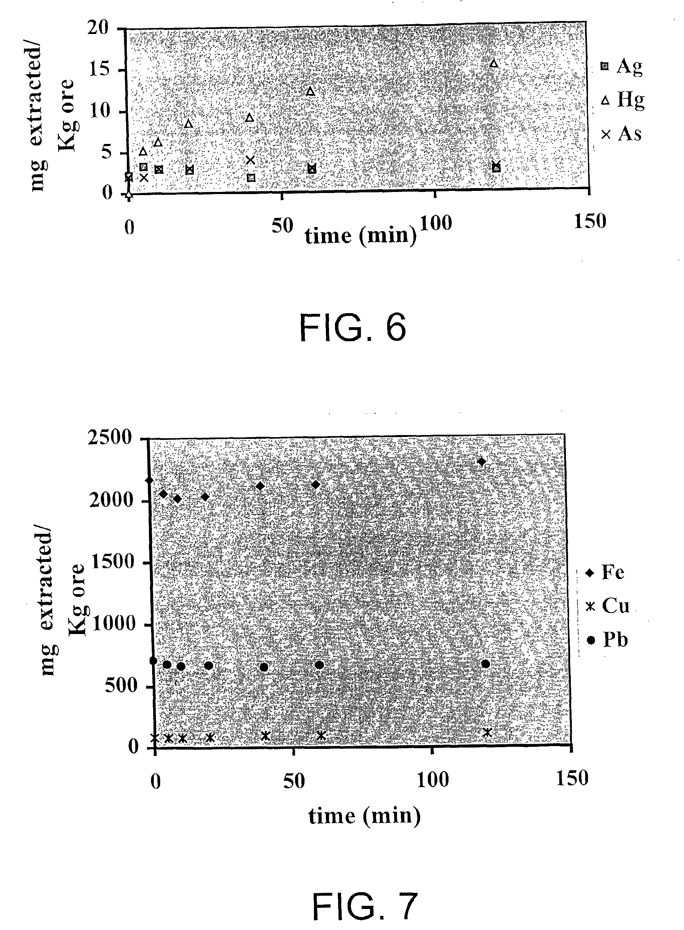

Figure 5 shows the evolution in time of the extraction of gold; figure 6 shows the extraction of Ag, Hg and As; and figure 7, the extraction of Fe, Pb and Cu.
As can be observed, the extraction of gold is 70% in 2 hours, a similar value to that obtained by conventional cyanidation in the same residence time.
The solubilization of Pb, Fe, Ag, Cu and As does not increase substantially with respect to the previous treatment, which confirms that the matrix of the ore (goethite, hematite and solid jarosite-beudantite solutions) is inert to ozone in this medium. The extraction of Hg increases as time passes, which demonstrates that the Hg sulphohalides present in the ore are attacked by the ozone in this medium. This is of interest, since it indicates that the treatment with $O_3$/0.1M HCl may be useful in order to eliminate Hg from mineral waste or contaminated soils.

After leaching, solid/liquid separation is performed. The recovery of the gold from the leaching liquid can be performed by conventional processes. For an ore of these characteristics, which generates very dilute gold solutions, the processes of adsorption of the gold with activated carbon or those of cementing the gold with zinc powder (Merrill-Crove Process) are particularly suitable.

**EXAMPLE 5: Recovery of gold from gold-plated printed circuit components.**

Numerous printed circuits used in electronics contain interfaces with a gold coating. These areas can be separated from the rest of the circuit by cutting.

The process is begun with 1.25 g of cuttings with approximately 1 $cm^2$ of gold-plated parts of a printed circuit. These parts are composed of a polymer base in which the copper conductor is inserted. The copper is coated with a layer of nickel about 3 $\mu$m thick, and on the nickel there is a coating of gold approximately 0.2 $\mu$m thick. Two leaching processes are performed:

1) Leaching with $O_2/H_2SO_4$

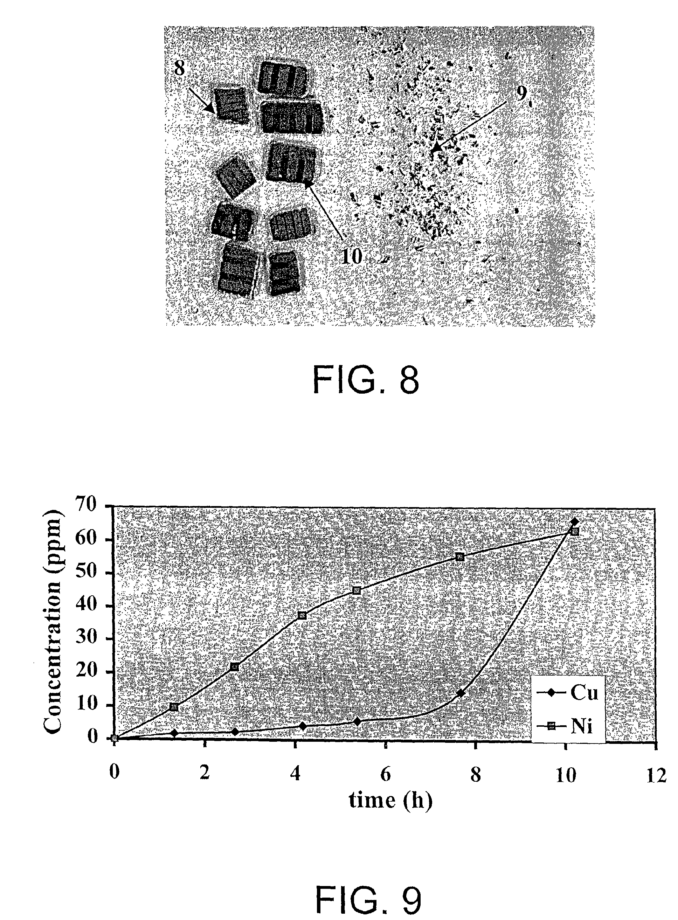

The cuttings are placed in an agitated reactor at 700 r.p.m. containing 300 $cm^3$ of a 0.5M $H_2SO_4$ solution. 21.5 l/h of oxygen are injected at $P_{O2}$= latm and at room temperature. During this step, a preferential attack on the nickel of the intermediate layer takes place, and the gold coating is clearly separated from the printed circuit. Figure 8 shows this effect.

Figure 9 shows the evolution in time of the nickel and copper concentration in solution. The preferential attack on the nickel can be observed. The copper only begins to pass quickly into the solution when the nickel is for the most part dissolved. The leaching time needed to separate the gold from the substrate is 10 hours.

A solid/liquid separation is performed. From the solid obtained, the gold particles (less than 2 mm in size) are separated from the circuit cuttings (1-2 cm) by sieving.

The recovery of the copper and nickel from the solution, in addition to the recovery of residual copper on the circuit cuttings can be verified in the same way as that outlined in example 6 (part 1).

The gold particles obtained are treated in the following leaching step:

2) Leaching with $O_3/O_2$/0.1M HCl

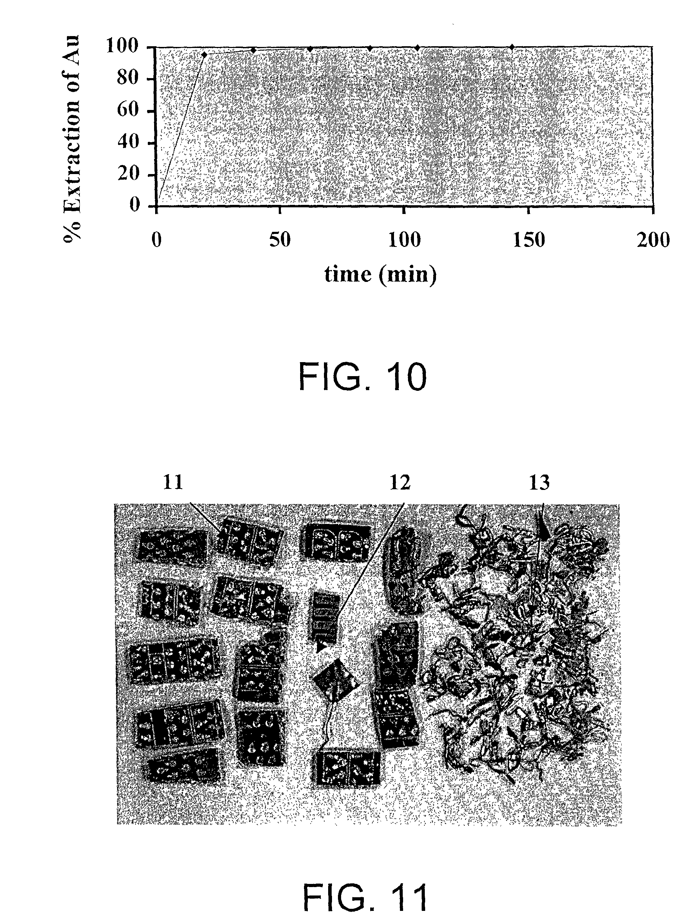

The gold is put into an agitated reactor at 700 r.p.m. containing 200 $cm^3$ of an 0.1M HCl solution. A flow of 21.5 l/h of $O_2/O_3$ is injected at $P_{O3}$= 0.036 atm and at room temperature. Figure 10 shows the evolution of the extraction in time. The extraction of the gold is achieved in minutes, due to the fineness of the particles.

The recovery of the gold from the leaching liquid solution can be performed in the same way as in example 4.

**EXAMPLE 6: Recovery of gold, copper, nickel and tin from printed circuits.**

The starting point is a metal concentrate, obtained by grinding and trimming of a printed circuit to a size of less than 2 cm. The base iron components are separated magnetically. The final concentrate consists of various metal fragments, in addition to fragments of polymeric substrate. This substrate contains inserted metallic conductors and welding alloys. Figure 11 shows the appearance of the concentrate. Its composition is:

| Cu | Sn | Ni | Fe | Pb | Au | Polymeric substrate |
|---|---|---|---|---|---|---|
| 33.7% | 14.5% | 2.0% | 2.3% | ~2% | 0.022% | ~45% |

Leaching with $O_2/H_2SO_4$ is performed:

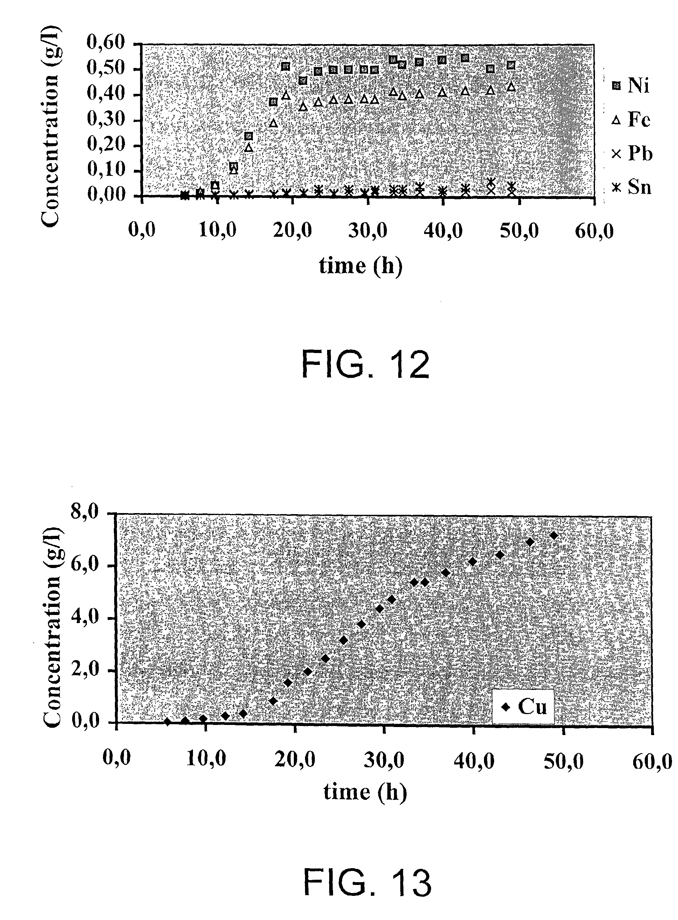

10.8 g of concentrate is put into an agitated reactor at 900 r.p.m. containing 500 $cm^3$ of 0.5M $H_2SO_4$ solution. 21.5 l/h of oxygen are injected at $P_{O2}$ = latm and at room temperature. Figure 12 shows the evolution of the Ni, Fe, Pb and Sn concentrations in time. Figure 13 shows the evolution of the copper concentration in time.

During the first 8 hours of leaching a selective attack on the Sn and the Pb takes place. However, these metals do not significantly enter the solution, but they form a suspension of spheroidal particles less than 1$\mu$m in size, mainly composed of $SnO_2$ and small quantities of $PbSO_4$. Leaching of the Sn and the Pb with $O_2$ takes place in accordance with the following equations:

$$Sn(s) + O_2(aq) \rightarrow SnO_2(s)$$

$$2Pb(s) + O_2(aq) + 2\ H_2SO_4(aq) \rightarrow 2PbSO_4(s) + 2H_2O$$

After aprox. 8 hours of treatment the precipitation of the nickel and the small quantities of iron that were not separated magnetically can be observed. The extraction of Ni is completed in aprox. 12 hours, that is to say, 20 hours after leaching has commenced. From this point on, the precipitation of Cu attains its maximum rate, ending some 50 hours after commencement of the treatment.

The suspension containing Cu and Ni is extracted by repulping together with the fine $SnO_2$ precipitate. This pulp is filtered. The $SnO_2$ precipitate can be recycled by introduction into the metallurgical processes to obtain Sn. The Cu and Ni solution in a sulphate medium can be treated by the conventional processes to obtain these metals by electrolysis.

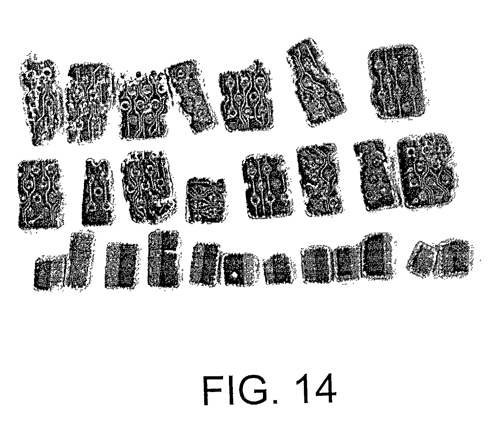

The residue consisting of the fragments of the polymeric substrate (1-2 cm in size) and the gold particles (less than 2 mm in size) are sieved in order to separate them. Figure 14 shows the appearance of the demetalised polymeric substrate.

The gold particles are treated in the same way as in example 5 (section 2).

### EXAMPLE 7. Recovery of gold, silver, copper, selenium and tellurium from anode slimes from copper electrorefining.

The current pyrometallurgical processes for the recovery of precious metals from anode slimes are based in a sequence of roasting and smelting steps. So, a very hazardous and toxic gases, dust and slags containing As, Se, Te and Sb are produced. The application of the present leaching process allows obtaining precious metals directly from the aqueous solutions.

An anode slime sample of the following composition was used:

| Cu | Ag* | Au | Se | Te | As | Pb | Sb |
|------|-----|-------|------|------|------|------|------|
| 32% | 16% | 0.08% | 6.0% | 1.0% | 6.8% | 3.1% | 3.6% |

*Small amounts of silver as silver chloride are not included. The estimated amount of this phase is ca. 2%.

Mineral composition is extremely complex. Basically, it consists of a fine intergrowth of oxidized phases containing Cu-Ag-Pb-Cl-Se-Sb-As and a great variety of selenides of the type Se-Te-Cu-Ag. gold is present in submicroscopic form.

Three leaching steps are carried out:

1) First step: leaching with $O_2/H_2SO_4$

2.5 g of the anode slime were placed in a reactor stirred at 900 rpm, which contained 500 $cm^3$ of 0.5M $H_2SO_4$. Oxygen was injected at 21.5 l/h, P=1atm and room temperature for 15 hours. During this step, copper and arsenic are selectively dissolved; silver and gold remain in the solid residue. 71% in weight of original anode slime is dissolved in this step, with the consequent increase of precious metals content in the residue. Extraction percentages are:

| Cu | Ag | Se | Te | As | Pb | Sb |
|-----|-------|------|-----|-----|-----|------|
| 87% | <0.1% | 0.2% | 43% | 96% | 4% | 37 % |

The solid residue is separated by filtration. The leaching liquid, which contains impure copper sulfate, can be introduced into the electrolyte depuration process in the same electrolytic plants that produce these anode slimes after precipitation of Te.

2) Second step: leaching with $O_2 / O_3 / H_2SO_4$

Solid residue from first step is placed in a reactor stirred at 900 rpm, which contained 500 $cm^3$ of 0.5M $H_2SO_4$, 21.5 l/h of a mixture of $O_2 / O_3$ are injected at atmospheric pressure and room temperature for 5 hours. Ozone partial pressure is 0.036 atm, with a stationary ozone concentration in the liquid of 30 ppm.

During this step, silver and selenium are selectively leached and tellurium leaching is practically completed. Extraction percentages are:

| Cu | Ag* | Se | Te | As | Pb | Sb |
|-----|-----|-----|-----|-----|-----|-----|
| 13% | 99% | 98% | 56% | 3% | 3% | 14% |

*Except for Ag amount present as chloride, which is approximately 2%

The residue of this step only contains 5% in weight of the original anode slime, therefore gold content in the residue has increased up to 1.6%.

The residue is separated by filtration. From leaching liquid, Ag, Se and Te can be recovered by conventional selective precipitation processes.

3) Third step: leaching with $O_2$ / $O_3$ / HCl

The solid residue from second step is placed in a reactor stirred at 900 rpm, which contains 100 cm$^3$ of 0.1M HCl. The same mixture of $O_2$ / $O_3$ that in step 2 is injected at room temperature for 3 hours.

During this step gold is selectively dissolved, remaining < 0.008% Au in the final residue. Extraction percentages are:

| Cu | Ag | Au | Se | Te | As | Pb | Sb |
|-----|-----|-----|-----|-----|-----|-----|-----|
| <0.1% | <0.1% | >90% | <1% | 1% | <1% | 25% | <0.5 % |

The leaching solution is separated from the residue by filtration. The gold in the leaching liquid can be recovered by anyone of conventional reduction processes. The solid residue consists of a mixture of lead sulfate and antimony oxide, along with small amounts of silver chloride. This residue can be introduced in lead pyrometallurgical plants to recover this metal as well as the small silver content.

**FIGURES**

**Figure 1:** Shows a diagram of the selective leaching process.

The polymetallic or mineral concentrate which is leached in step A, leached again in step C and leached for the last time in **step E** is put into inlet **1**. Step **2** is a reduction with hydrogen or by electrolysis whereby copper is obtained, step **3** is another reduction with hydrogen or by electrolysis whereby silver is obtained, and step **4** is another reduction with sulphur dioxide or by electrolysis whereby gold is obtained. After step **2**, the following step is step **5**, which is a reduction with hydrogen or by electrolysis whereby nickel is obtained, and/or step **6**, which is another reduction with hydrogen or by electrolysis whereby cobalt is obtained. Finally, after step **4**, step **7** is performed, which is another reduction whereby palladium is obtained.

**Figure 2:** Shows the evolution of the extraction of copper in time.

**Figure 3:** Shows the evolution of the extraction of silver in time.

**Figure 4:** Shows the evolution of the extraction of gold in time.

**Figure 5:** Shows the evolution in time of the extraction of gold from gossan ore.

**Figure 6:** Shows the evolution in time of the extraction of Ag, Hg and As.

**Figure 7:** Shows the evolution in time of the extraction of Fe, Pb and Cu.

**Figure 8:** Shows the effect of $O_2$/$H_2SO_4$ on the gold coating. In this figure mark **8** indicates the polymeric substrate, mark **9** indicates gold particles, and mark **10** indicates the copper conductor.

**Figure 9:** Shows the evolution in time of the nickel and copper concentration in solution.

**Figure 10:** Shows the evolution of the extraction of gold in time.

**Figure 11:** Shows the appearance of the concentrate. In this figure mark **11** indicates the polymer with inserted copper and Sn/Pb welding, mark **12** indicates the gold coating, and mark **13** indicates various metal fragments.

**Figure 12:** Shows the evolution of the Ni, Fe, Pb and Sn concentrations in time.

**Figure 13:** Shows the evolution of the copper concentration in time.

**Figure 14:** Shows the appearance of the demetalized polymeric substrate.

**Claims**

1. Process of leaching metals from the materials containing them, **characterized in that** these materials come into contact with a solution containing oxygen, ozone and a third complexing reagent.

2. Process according to claim 1, **characterized in that** these metals are precious metals.

3. Process according to claim 1 or claim 2, **characterized in that** these metals are preferably gold and palladium.

4. Process according to claim 1, **characterized in that** the third complexing reagent is a type of redox pair whose reduced form is liable to be oxidized in the leaching solution and whose oxidized form is capable of attacking the materials to be leached.

5. Process according to claim 1, **characterized in that** the third complexing reagent is a depassivating or pickling reagent.

6. Process according to claim 1, **characterized in that** the third complexing reagent is an anion, preferably chloride.

7. Process according to claim 6, **characterized in that** this chloride anion is added to the solution in the form of HCl, chloride salts or mixtures of any of these substances.

8. Process of selective leaching and/or passivation of materials containing metals, **characterized in that** it includes two or more, in this order, of the following leaching steps:

    (a) Treatment of the material with an aqueous solution in the presence of oxygen.
    (b) Treatment of the material with an aqueous solution in the presence of oxygen and ozone.
    (c) Treatment of the material with an aqueous solution in the presence of oxygen, ozone and a third reagent.

9. Process according to claim 8, **characterized in that** after each of the leaching steps separation of the resultant phases is performed.

10. Process according to claim 8, **characterized in that** prior to this process the following steps are performed:

    i) Treatment of the material with an aqueous solution in the absence of oxygen.
    ii) Separation, where applicable, of the resultant phases.

11. Process for recovery of metals from the materials that contain them, **characterized in that** the recovery of a noble metal from a laminar material comprising a base metal and said noble metal is carried out according to the following leaching step:

    - Treating said laminar material with an aqueous solution comprising a gas so that a selective leaching of said base metal is carried out by releasing said noble metal when said base metal is dissolved.

12. Process according to claim 11, **characterized in that** said gas is oxygen, ozone or mixtures thereof.

13. Process according to claim 11, **characterized in that** said noble metal is gold, silver, rhodium or palladium.

14. Process according to claim 11, **characterized in that** said base metal comprises at least one of the following metals: copper, silver or nickel.

15. Process according to claims 8, 10 or 11, **characterized in that** the aqueous solution is acidic.

16. Process according to claim 8, 10 or 11, **characterized in that** the aqueous solution is alkaline.

17. Process according to claim 15, **characterized in that** the acid of the solution is an inorganic acid.

18. Process according to claim 17, **characterized in that** the inorganic acid is sulphuric acid.

**19.** Process according to claim 16, **characterized in that** the alkaline solution comprises an inorganic base.

**20.** Process according to claim 19, **characterized in that** the inorganic base is sodium hydroxide.

**21.** Use of the process according to any one of the previous claims for leaching of metals from scrap, ores, concentrates, by-products, waste, soils and mixtures thereof.

# FIG. 1

EP 1 281 779 A2

FIG. 2

FIG. 3

## FIG. 4

## FIG. 5

FIG. 6

FIG. 7

# FIG. 8

# FIG. 9

FIG. 10

FIG. 11

FIG. 12

FIG. 13

FIG. 14